# EUROPEAN PATENT APPLICATION

(11) **EP 3 225 868 A1**
(43) Date of publication of application: **04.10.2017**
(21) Application number: 15862160.7
(22) Date of filing: 24.09.2015
(51) Int. Cl.: F16D 13/75, F16D 13/52

(54) **CLUTCH DEVICE**

(30) Priority: 26.11.2014 JP 2014239152
(71) Applicant: Aisin Seiki Kabushiki Kaisha, Kariya-shi, Aichi 448-8650 (JP)
(72) Inventor: YAMASAKI, Shoichi, Kariya-shi Aichi 448-8650 (JP); KUSUNOSE, Kazumasa, Kariya-shi Aichi 448-8650 (JP); YAMADA, Hiroyuki, Kariya-shi Aichi 448-8650 (JP)
(74) Representative: Kramer Barske Schmidtchen Patentanwälte PartG mbB
(86) International application number: PCT/JP2015/076973
(87) International publication number: WO 2016/084466

(57) **Abstract**

A clutch device according to an embodiment includes, for example, a first member, a second member provided to be movable between a first position at which torque is transmitted by friction between the second member and the first member and a second position being away from the first member as compared to the first position, the second position at which torque is inhibited from being transmitted, a third member changing a position of the second member, a variably settable portion positioned between the second member and the third member and configured to change a length in the axial direction, a cover covering the variably settable portion, the variably settable portion including a fourth member and a fifth member, the cover including a stopper portion which restricts a movement of the fifth member to one side in the axial direction by supporting the fifth member in the axial direction.

## Description

### TECHNICAL FIELD

An embodiment of the present invention relates to a clutch device.

### BACKGROUND ART

A clutch device including a friction compensation means for compensating changes in characteristics caused by abrasion of a friction member is known. For example, Patent document 1 discloses a friction compensation means configured to perform an adjustment operation in which a contact portion at an outer circumferential end portion of a pressure plate is brought to make contact with a stopper portion provided at a clutch cover to restrict a movement of the pressure plate so as to generate a clearance between an adjustment wedge and a diaphragm spring.

### DOCUMENT OF PRIOR ART

### PATENT DOCUMENT

Patent document 1: JP4178865B

### OVERVIEW OF INVENTION

### PROBLEM TO BE SOLVED BY INVENTION

According to the aforementioned known construction, the contact portion is necessarily provided at the outer circumferential end portion of the pressure plate, which raises an issue that the construction of the pressure plate is complicated. Therefore, according to such clutch device, for example, it is desirable to restrain a construction of a member which is related to torque transmission and which is movable in an axial direction from being complicated.

### MEANS FOR SOLVING PROBLEM

A clutch device according to an embodiment includes, for example, a first member provided to be rotatable around a rotation center, a second member provided to be rotatable around the rotation center and provided to be movable in an axial direction of the rotation center at least between a first position at which torque is transmitted by friction between the second member and the first member and a second position being away from the first member as compared to the first position, the second position at which torque is inhibited from being transmitted, a first elastic member generating a force by which one of the first member and the second member is pressed against the other of the first member and the second member, the force changing depending on a position of the second member in the axial direction, a third member provided to be movable in the axial direction and changing the position of the second member in the axial direction, a variably settable portion positioned between the second member and the third member and configured to change a length of the variably settable portion in the axial direction, a cover provided to be rotatable about the rotation center to cover the variably settable portion, the variably settable portion including a fourth member which is positioned at one side in the axial direction relative to the one of the first member and the second member and which is disposed between the one of the first member and the second member and the first elastic member, the variably settable portion including a fifth member which is positioned at the other side in the axial direction relative to the fourth member and which is disposed between the fourth member and the one of the first member and the second member, the fifth member being configured to separate from the fourth member in the axial direction, the fifth member being configured to move to the other side in the axial direction relative to the fourth member by moving to one side in a circumferential direction of the rotation center relative to the fourth member, and a moving portion, the cover including a stopper portion which restricts a movement of the fifth member to the one side in the axial direction by supporting the fifth member in the axial direction, the moving portion moving the fifth member to the one side in the circumferential direction relative to the fourth member in a case where the fifth member is restricted from moving to the one side in the axial direction by the stopper portion and the fourth member and the fifth member are separated from each other in the axial direction. Thus, according to the clutch device of the embodiment, for example, the stopper portion supports the fifth member of the variably settable portion in the axial direction to thereby restrain a construction of the second member which is related to torque transmission and which is movable in the axial direction from being complicated.

According to the aforementioned clutch device, for example, at least one of a contact portion at the stopper portion making contact with the fifth member and a contact portion at the fifth member making contact with the stopper is an inclined surface inclining to the other side in the axial direction while extending to the one side in the circumferential direction. Thus, even in a case where a length of the variably settable portion in the axial direction is changed, fluctuation in distance between the fifth member and the stopper in the axial direction may be restrained.

According to the aforementioned clutch device, for example, the fourth member is connected to the first elastic member, and the fifth member is away from the first elastic member and is rotatable about the rotation center relative to the second member. Thus, the first elastic member is restrained from being worn by the fourth member, for example.

The aforementioned clutch device, for example, includes a second elastic member disposed between the second member and the fifth member and generating a force against the force of the first elastic member applied to the fifth member, the force of the second elastic member changing depending on the position of the second member in the axial direction. Thus, a force of an operation portion for moving the second member may be reduced, for example.

### BRIEF DESCRIPTION OF DRAWINGS

[Fig. 1] is a schematic cross-sectional view illustrating one side of an example of a clutch device according to a first embodiment with reference to a center line thereof in a case where a rotation transmission portion is in an interruption state;
[Fig. 2] is a schematic cross-sectional view illustrating one side of the example of the clutch device according to the first embodiment with reference to the center line thereof in a case where the rotation transmission portion is in a boundary state between a half clutch state and the interruption state;
[Fig. 3] is a schematic cross-sectional view illustrating one side of the example of the clutch device according to the first embodiment with reference to the center line thereof in a case where the rotation transmission portion is in a transmission state;
[Fig. 4] is a schematic cross-sectional view illustrating one side of the example of the clutch device according to the first embodiment with reference to the center line thereof and illustrating a state where a variably settable portion is in the middle of being operated;
[Fig. 5] is a graph illustrating a relation between a position of a second member in the axial direction and a force generated by each elastic member of the example of the clutch device according to the first embodiment;
[Fig. 6] is a schematic view illustrating a fourth member and a fifth member which are included in the variably settable portion of the example of the clutch device according to the first embodiment and which extend in a circumferential direction;
[Fig. 7] is a diagram illustrating a saw-tooth train and a meshing portion included in the variably settable portion of the example of the clutch device according to the first embodiment as viewed from a radially outer side and illustrating a state before adjustment;
[Fig. 8] is a diagram illustrating the saw-tooth train and the meshing portion included in the variably settable portion of the example of the clutch device according to the first embodiment as viewed from the radially outer side and illustrating a state where the saw-tooth train and the meshing portion are separated from each other in the axial direction;
[Fig. 9] is a diagram illustrating the saw-tooth train and the meshing portion included in the variably settable portion of the example of the clutch device according to the first embodiment as viewed from the radially outer side and illustrating a state where the saw-tooth train and the meshing portion are adjacent to each other in the axial direction (i.e., a state after the adjustment);
[Fig. 10] is a graph illustrating a relation between the position of the second member in the axial direction and the force generated by each elastic member of the example of the clutch device according to the first embodiment and illustrating the state before the adjustment and the state after the adjustment;
[Fig. 11] is a diagram illustrating the fifth member and a surrounding of the fifth member of the example of the clutch device according to the first embodiment as viewed from the radially outer side;
[Fig. 12] is a diagram illustrating the fifth member and the surrounding of the fifth member of the example of the clutch device according to the first embodiment as viewed from the radially outer side and illustrating the state before the adjustment and a state during the adjustment;
[Fig. 13] is a diagram illustrating the fifth member and the surrounding of the fifth member of the example of the clutch device according to the first embodiment as viewed from the radially outer side and illustrating the state before the adjustment and the state during the adjustment in a case where a friction member becomes thin;
[Fig. 14] is a diagram illustrating a saw-tooth train and a meshing portion included in a variably settable portion of an example of a clutch device according to a first modified example as viewed from a radially outer side in a state before adjustment;
[Fig. 15] is a diagram illustrating the saw-tooth train and the meshing portion included in the variably settable portion of the example of the clutch device according to the first modified example as viewed from the radially outer side in a state where the saw-tooth train and the meshing portion are separated from each other in the axial direction;
[Fig. 16] is a schematic view illustrating a fourth member and a fifth member which are included in a variably settable portion of an example of a clutch device according to a second modified example and which extend in a circumferential direction; and
[Fig. 17] is a schematic cross-sectional view illustrating a portion of an example of a clutch device according to a second embodiment in a case where a rotation transmission portion is in an interruption state.

### MODE FOR CARRYING OUT THE INVENTION

Embodiments and modified examples of the present invention are disclosed below. Constructions of the embodiments and the modified examples described below and effects and results derived from the aforementioned constructions are examples. The present invention is achievable by other constructions than those disclosed in the embodiments and the modified examples below. According to the present embodiment, at least one effect among various effects achievable by the aforementioned constructions is obtainable.

Further, similar components are included among the plural embodiments and modified examples disclosed below. In the following, the similar components bear common reference numerals and duplication of explanation is omitted. In addition, unless otherwise noted, an axial direction, a radial direction and a circumferential direction correspond to those with reference to a rotation center Ax. The rotation center Ax may be also referred to as a rotation axis and an axis center, for example. Further, one side in the axial direction corresponds to a left side in each drawing and the other side in the axial direction corresponds to a right side in each drawing for convenience.

### <First embodiment>

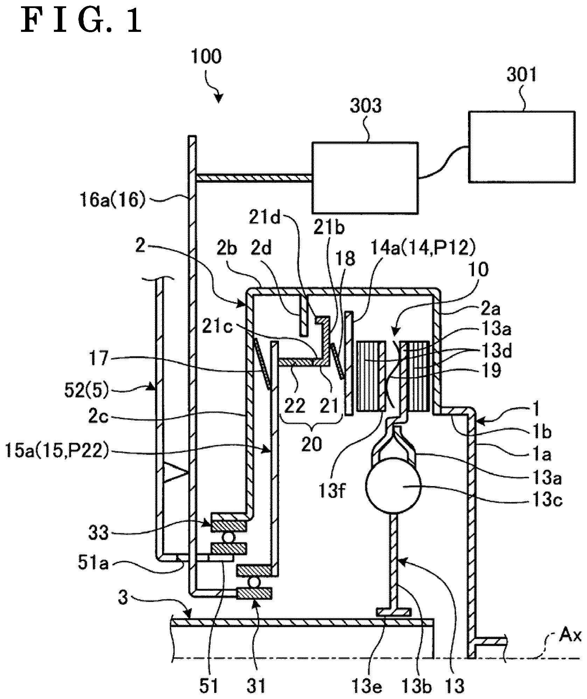

A clutch device 100 according to the present embodiment as illustrated in Fig. 1 is positioned between an engine and a transmission, for example. The clutch device 100 is not limited to be arranged between the engine and the transmission and may be arranged at the other position. The clutch device 100 may be also provided at various vehicles such as a hybrid automobile, for example, and at a machine including a rotary component, for example.

In the present embodiment, the clutch device 100 is a so-called single clutch including a single rotation transmission portion 10. The clutch device 100 is switchable between a transmission state in which torque is transmitted at the rotation transmission portion 10 and an interruption state in which the transmission of torque at the rotation transmission portion 10 is interrupted on a basis of movements of movable portions including members 15, 16 and a bearing 31 in the axial direction by an actuator 303 which is controlled by an ECU 301. The rotation transmission portion 10 may change torque transmitted between members 1, 2 and a shaft 3. The member 1 serves as one of an input member and an output member for torque while the shaft 3 serves as the other of the input member and the output member. The rotation transmission portion 10 is able to transmit torque in a so-called half clutch state in which output torque decreases relative to input torque.

The clutch device 100 includes members 1, 2, 13, 14, 15, 16, the shaft 3 and the bearing 31 as components related to transmission and interruption of rotation by the rotation transmission portion 10. The members 1, 2, 13 to 16 and the shaft 3 may be made of metallic material, for example.

The shaft 3 is rotatably supported at a case 5 via a bearing portion (not illustrated). The case 5 is also referred to as a transmission case. The shaft 3 rotates about the rotation center Ax. The shaft 3 may be formed in at least a partially cylindrical form, for example.

The case 5 includes a protruding portion 51. The protruding portion 51 covers the shaft 3 from an outer side in the radial direction. The protruding portion 51 protrudes, from a wall portion 52, in a cylindrical form with reference to the rotation center Ax towards the other side in the axial direction, i.e., towards the right side in Fig. 1. The protruding portion 51 may be integrally provided at the other portion of the case 5 such as the wall portion 52, for example, or constituted as a separate member from the other portion so as to be integrally provided at the other portion by means of a coupling member such as a screw and a rivet, for example. The case 5 serves as an example of a housing.

The member 1 is provided to be rotatable about the rotation center Ax. The member 1 includes wall portions 1a and 1b. The wall portion 1a that is formed in a disc form extends, being substantially orthogonal to the rotation center Ax. The wall portion 1b is formed in a cylindrical form while protruding to one side in the axial direction, i.e., to the left side in Fig. 1, from a radially outer end portion of the wall portion 1a. The member 1 is supported at a drive source such as an engine, for example. The member 1 is also referred to as a drive plate or a flywheel, for example.

The cover 2 is provided to be rotatable about the rotation center Ax. The cover 2 includes wall portions 2a, 2b, 2c and 2d. The wall portion 2a is connected to the wall portion 1a of the member 1. The wall portion 2a that is formed in an annular form and a plate form extends, being substantially orthogonal to the rotation center Ax. The wall portion 2b protrudes from a position in the wall portion 2a closer to the rotation center Ax than the wall portion 1a towards one side in the axial direction, i.e., towards the left side in Fig. 1, so as to be formed in a cylindrical form with reference to the rotation center Ax. The wall portion 2c is connected to the wall portion 2b. The wall portion 2c that is formed in a disc form extends while intersecting with the rotation center Ax. A radially inner rotation portion of a bearing 33 serving as one rotation portion is connected to the protruding portion 51. A radially outer rotation portion of the bearing 33 serving as the other rotation portion is connected to a radially inner end portion of the wall portion 2c. The cover 2 including the wall portion 2c is supported to be rotatable about the rotation center Ax by the bearing 33. The cover 2 is also referred to as a clutch cover, for example.

The plural (for example, three) wall portions 2d disposed to be spaced away in the circumferential direction inwardly protrude to a radially inner side from the respective wall portions 2b. Each of the wall portions 2d is formed in a rectangular form and a plate form intersecting with the rotation center Ax.

The member 13 is provided at one axial side of the wall portion 2a, i.e., at the left side in Fig. 1. The member 13 includes wall portions 13a, 13b, 13f, an elastic member 13c, a friction member 13d and a spline coupling portion 13e. The wall portion 13a is formed in a disc form to expand, being substantially orthogonal to the rotation center Ax. The wall portion 13b is formed in a disc form to expand, being substantially orthogonal to the rotation center Ax. Specifically, one of the wall portion(s) 13a and the wall portion(s) 13b is provided in a state being sandwiched in the axial direction between two of the other of the wall portion(s) 13a and the wall portion(s) 13b. Further specifically, the wall portion 13b is provided in a state being sandwiched in the axial direction between the two wall portions 13a. In addition, the wall portions 13a and 13b are rotatable at least at a portion of a rotation range in a state where an angular difference is provided, i.e., in a state being twisted each other. The elastic member 13c is disposed between the wall portion 13a and the wall portion 13b so as to elastically expand and contract substantially along the circumferential direction. The elastic member 13c is a coil spring, for example. The elastic member 13c expands and contracts along the circumferential direction based on a relative rotation angle between the wall portion 13a and the wall portion 13b. The elastic member 13c stores torque as a compression force by elastically contracting and discharges the compression force as torque by elastically expanding. That is, the member 13 may ease torque fluctuation by the elastic member 13c. The member 13 integrally rotates with the shaft 3. The member 13 is provided to be movable in the axial direction. Specifically, one of the wall portion 13a and the wall portion 13b is supported at the shaft 3 via the spline coupling portion 13e that is formed in a cylindrical form. Further specifically, the wall portion 13b is supported at the shaft 3 via the spline coupling portion 13e. The other of the wall portion 13a and the wall portion 13b includes a region which is positioned between the wall portion 2a and a wall portion 14a. Further specifically, the wall portion 13a includes the region positioned between the wall portions 2a and 14a. The member 13 is also referred to as a clutch disc, for example.

The wall portion 13f is formed in an annular form and a plate form to expand, being substantially orthogonal to the rotation center Ax. The wall portion 13f is positioned between the wall portion 13a and either one of the wall portions 2a and 14a. That is, the wall portion 13f is positioned at one axial side or the other axial side of the wall portion 13a. Specifically, the wall portion 13f is positioned facing the wall portion 14a. That is, the wall portion 13f is positioned at one axial side of the wall portion 13a, i.e., at the left side in Fig. 1. The wall portion 13f integrally rotates with the wall portion 13a. An elastic member 19 is disposed between the wall portion 13a and the wall portion 13f. The elastic member 19 is thin in the axial direction and is constituted as a diaphragm spring, a cone spring, a disc spring or a plate spring, for example. The elastic member 19 is elastically deformed while the wall portions 13a and 13f are coming closer to each other. The elastic member 19 applies a reaction force to each of the wall portions 13a and 13f in association with elastic deformation of the elastic member 19. The elastic member 19 applies the force to each of the wall portions 13a and 13f in a direction where the wall portions 13a and 13f separate from each other. That is, a force in a direction opposite from the wall portion 13f is applied to the wall portion 13a by the elastic member 19 while a force in a direction opposite from the wall portion 13a is applied to the wall portion 13f by the elastic member 19. The friction members 13d are disposed between one of the wall portions 13a and 13f (i.e., the wall portion 13a as an example in Fig. 1) and the wall portion 2a, and between the other of the wall portions 13a and 13f (i.e., the wall portion 13f as the example in Fig. 1) and the wall portion 14a, respectively. Specifically, the friction members 13d are disposed between the wall portion 13a and the wall portion 2a and between the wall portion 13f and the wall portion 14a, respectively. The friction members 13d are joined to the wall portions 13a and 13f respectively by adhesion or connection members, for example. The friction member may be also provided at each of the wall portions 2a and 14a.

The member 14 includes the wall portion 14a. The wall portion 14a is formed in an annular form and a plate form to expand while substantially intersecting with the rotation center Ax. The member 14 is supported at the member 15 via the elastic member 14 and a variably settable portion 20. The member 14 is provided to be movable in the axial direction. The member 14 is constituted to integrally rotate with the cover 2. The member 14 may be also referred to as a pressure plate.

The member 15 includes a wall portion 15a, for example. The member 15 is supported to be rotatable around the rotation center Ax via the bearing 31 at the protruding portion 51. A radially outer rotation portion of the bearing 31 is supported at the protruding portion 51 so as to be movable in the axial direction in a state not rotating relative to the protruding portion 51. The radially outer rotation portion of the bearing 31 is connected to a radially inner end portion of the wall portion 15a. A radially inner rotation portion of the bearing 31 is connected to a radially inner end portion of a wall portion 16a. That is, the member 15 is supported at the protruding portion 51 so as to be movable in the axial direction via the bearing 31 and to be rotatable about the rotation center Ax. The member 15 integrally rotates with the cover 2 because of a catch or friction, for example, between the cover 2 and the member 15 in the circumferential direction. The member 15 is also referred to as a release plate.

An elastic member 17 is disposed between the wall portion 2c of the cover 2 and the wall portion 15a of the member 15. The elastic member 17 is thin in the axial direction and is constituted as a diaphragm spring, a cone spring, a disc spring or a plate spring, for example. The elastic member 17 is elastically deformed while the wall portions 2c and 15a are coming closer to each other. The elastic member 17 applies a reaction force to each of the wall portions 2c and 15a in association with elastic deformation of the elastic member 17. The elastic member 17 applies the force to each of the wall portions 2c and 15a in a direction where the wall portions 2c and 15a separate from each other. That is, a force in a direction opposite from the wall portion 15a is applied to the wall portion 2c by the elastic member 17 while a force in a direction opposite from the wall portion 2c is applied to the wall portion 15a by the elastic member 17. The elastic member 17 serves as an example of a first elastic member.

The member 16 is provided so that the bearing 31 is movable in the axial direction relative to the case 5. The member 16 includes the extension portion 16a. The extension portion 16a extends along the radial direction to be formed in a plate form and a band form or a bar form. The extension portion 16a is connected to the rotation portion of the bearing 31 positioned at the opposite side from the rotation portion supported to the protruding portion 51. Specifically, the extension portion 16a is connected to the radially inner rotation portion of the bearing 31. Thus, the actuator moves the connection portion between the aforementioned radially inner rotation portion of the bearing 31 and the member 16 so that the bearing 31, the member 15 and the member 14 move in the axial direction. The rotation transmission portion 10 is switched among the transmission state, the half clutch state and the interruption state accordingly. The extension portion 16a is also referred to as an arm portion, a lever portion or a wall portion.

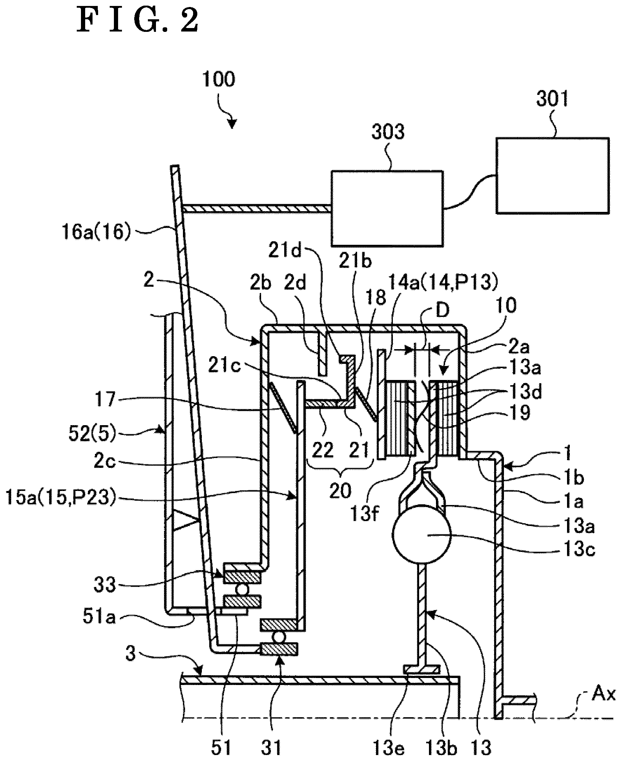

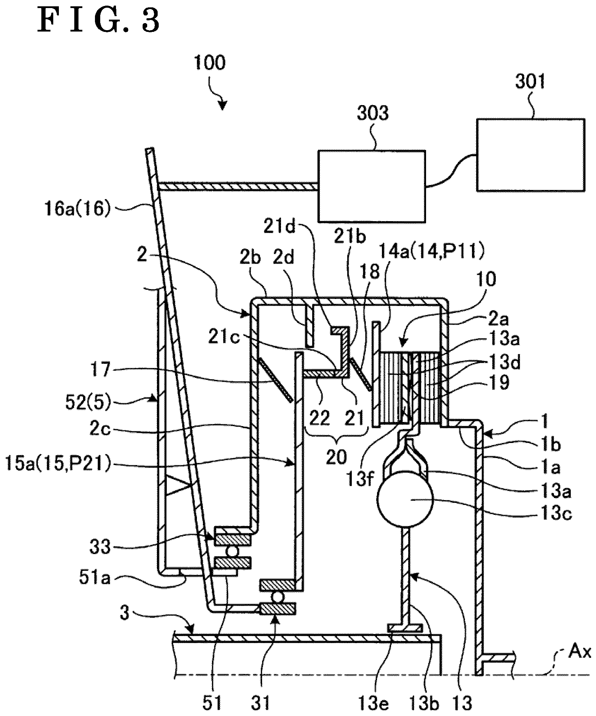

As illustrated in Figs. 1 to 3, the member 14 is at least movable between a position P11 (Fig. 3) and a position P12 (Fig. 1) in the axial direction. The member 14 may be thus disposed at a position P13 (Fig. 2) between the position P1 and the position P12.

An elastic member 18 and the variably settable portion 20 are disposed between the members 14 and 15. The elastic member 18 is disposed between the member 14 and the variably settable portion 20. The variably settable portion 20 is disposed between the elastic member 18 and the member 15.

The elastic member 18 is thin in the axial direction and is constituted as a diaphragm spring, a cone spring, a disc spring or a plate spring, for example. The elastic member 18 is elastically deformed while the wall portions 14a and 15a are coming closer to each other. The elastic member 18 applies a reaction force to each of the wall portions 14a and 15a in association with elastic deformation of the elastic member 18. The elastic member 17 applies the force to each of the wall portions 14a and 15a in a direction where the wall portions 14a and 15a separate from each other. That is, a force in a direction opposite from the wall portion 15a is applied to the wall portion 14a by the elastic member 18 while a force in a direction opposite from the wall portion 14a is applied to the wall portion 15a by the elastic member 18. The elastic member 18 serves as an example of a second elastic member.

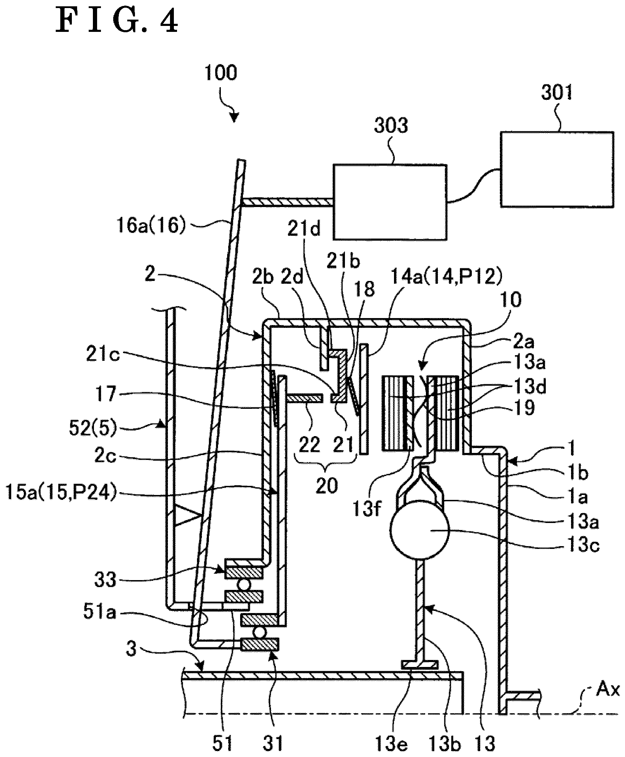

The variably settable portion 20 includes two members 21 and 22. The member 21 is connected to the member 15 via the elastic member 18. The member 22 is supported at the member 15. The variably settable portion 20 is covered by the cover 2. The variably settable portion 20 is brought to a contact state (a normal state as illustrated in Figs. 1 to 3) in which the two members 21 and 22 are in contact with each other and a separated state (a set state as illustrated in Fig. 4) in which the two members 21 and 22 are separated from each other. In the contact state, the members 14 and 15 are in contact with each other in the axial direction via the elastic member 18 so as to be integral. In the separated state, the members 14 and 15 are separated from each other in the axial direction. Positions P21, P22 and P23 of the member 15 correspond to the positions P11 to P13 of the member 14. As illustrated in Fig. 4, the member 15 may be disposed at a position P24 which is at an opposite side from the position P21 relative to the position P22 with the movement of the member 16. The positions P21 to P23 fall within a movable range of the member 15 upon normal operation of the clutch device 100. The position P24 is out of the normal movable range and is provided for adjustment. In a case where the member 15 is disposed at the position P24, the variably settable portion 20 is brought to the separated state (set state) so that the members 21 and 22 are separated from each other and the members 14 and 15 are separated from each other. The member 21 makes contact with the wall portion 2d in the axial direction and therefore is inhibited from moving to one axial side, i.e., to the left side in Fig. 4, beyond the position at which the member 21 makes contact with the wall portion 2d. The wall portion 2d supports the member 21 in the axial direction to restrict the movement of the member 21 to one axial side. Specifically, the wall portion 2d supports a protruding portion 21 d of the member 21 in the axial direction. The wall portion 2d serves as an example of a stopper portion.

In a state where the member 14 is placed between the position P13 and the position P11, i.e., in the state illustrated in Fig. 2, in the state illustrated in Fig. 3 and in a state between the aforementioned two states, the elastic member 19 is compressed in the axial direction by the wall portions 13a and 13f. In such state, the member 14 receives an elastic compression reaction force resulting from the compression of the elastic member 19 by the wall portion 13a and the wall portion 13f, i.e., the force to one side in the axial direction. In addition, in such state, torque is transmitted via each of the friction members 13d between the member 13 and each of the cover 2 and the member 14. In a state where the member 14 is disposed in the vicinity of the position P13, slippage is generated between the friction member 13d and each of the cover 2 and the member 14. The aforementioned state is the half clutch state of the rotation transmission portion 10. The rotation transmission portion 10 is in the transmission state in a state where the member 14 is arranged at the position P11. The member 13 serves as an example of a first member. The member 14 serves as an example of a second member. The position P11 serves as an example of a first position. The position of the member 14 in the axial direction changes with change of the position of the member 15 in the axial direction. The member 15 serves as an example of a third member.

In a state where the member 14 is disposed between the position P13 and the position P12, i.e., in the state illustrated in Fig. 1 and in a state between the state illustrated in Fig. 1 and the state illustrated in Fig. 2, the friction member 13d separates from each of the wall portions 2a and 14a. Thus, in the aforementioned states, the member 14 is inhibited from receiving the elastic compression reaction force resulting from the compression of the elastic member 19 by the wall portion 13a and the wall portion 13f, i.e., the force to one side in the axial direction. The rotation transmission portion 10 is thus in the interruption state. The position P12 serves as an example of a second position.

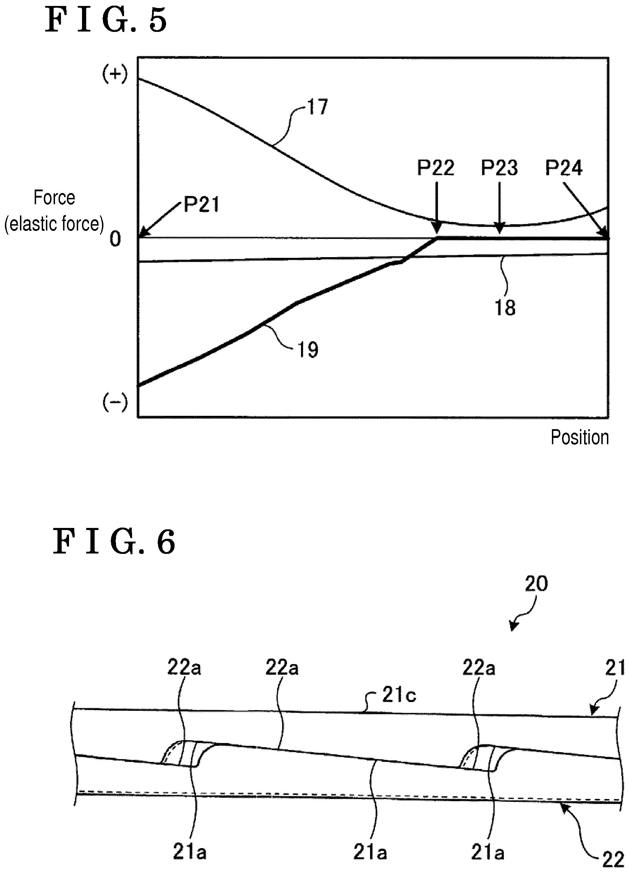

The force applied to each of the members 14 and 15 from each of the elastic members 17, 18 and 19 changes depending on the position of each of the members 14 and 15 in the axial direction. Fig. 5 shows an example of a magnitude of force (elastic force) applied to the member 15 from each of the elastic members 17, 18 and 19 based on the position of the member 15. Based on the position of the member 15 in the axial direction, a compression amount and further an elastic compression reaction force of each of the elastic members 17, 18 and 19 in the axial direction change. A horizontal axis in Fig. 5 indicates the position of the member 15. An origin of the horizontal axis corresponds to the position of the member 15 in the state illustrated in Fig. 3, i.e., the position P21 of the member 15 where the wall portion 2a and the wall portion 14a are closest to each other in a state where the wall portion 13a and the wall portion 13f of the member 13 are disposed and sandwiched between the wall portion 2a and the wall portion 14a. In a vertical axis in Fig. 5, a positive side (upper side) corresponds to a direction where the wall portion 14a comes closer to the wall portion 13a (the other side in the axial direction corresponding to the right side in Figs. 1 to 4) and a negative side (lower side) corresponds to a direction where the wall portion 14a separates from the wall portion 13a (one side in the axial direction corresponding to the left side in Figs. 1 to 4). Fig. 5 also shows the same characteristics in a case where the horizontal axis corresponds to the position of the member 14, the position of the member 16 or stroke of the actuator 303, for example.

The elastic member 17 applies a force to each of the member 15 and the wall portion 14a of the member 14 in a direction where each of the member 15 and the wall portion 14a of the member 14 approaches the wall portion 13a, i.e., a force by which the wall portion 14a is pressed against the wall portion 13a. The magnitude (absolute value) of the force generated by the elastic member 17 is maximum in a state where the member 15 is positioned at the position P21 (origin) and becomes gradually smaller when the member 15 moves from the position P21 to the position P22 in the axial direction.

The elastic member 18 applies a force to each of the members 14 and 15 in a direction where each of the members 14 and 15 separates from the wall portion 13a, i.e., a force opposite from the force by which the wall portion 14a is pressed against the wall portion 13a. The magnitude (absolute value) of the force generated by the elastic member 18 is maximum in a state where the member 15 is positioned at the position P21 (origin) and becomes gradually smaller when the member 15 moves from the position P21 to the position P22 in the axial direction. At this time, a spring constant of the elastic member 18 is smaller than a spring constant of the elastic member 17 so that the magnitude of the force applied to the member 15 by the elastic member 18 is smaller than the magnitude of the force applied to the member 15 by the elastic member 17. The elastic member 18 decreases a force to the other side in the axial direction applied to the member 14 from the member 15.

The elastic member 19 also applies a force to each of the member 15 and the wall portion 14a of the member 14 in a direction separating from the wall portion 13a, i.e., a force opposite from the force by which the wall portion 14a is pressed against the wall portion 13a. The magnitude (absolute value) of the force generated by the elastic member 18 is maximum in a state where the member 15 is positioned at the position P21 (origin, at a left end) and becomes gradually smaller when the member 15 moves from the position P21 to the other side in the axial direction. At this time, the elastic force of the elastic member 18 is greater than the elastic force of the elastic member 19 within a low torque range at a time of vehicle start and is smaller than the elastic force of the elastic member 19 within the other torque range after the vehicle start. In addition, as mentioned above, the elastic member 19 only applies the force to each of the members 14 and 15 in a state where the member 14 is disposed between the position P11 and the position P13, i.e., in a state where the member 15 is disposed between the position P21 and the position P23 (i.e., the state in Fig. 2, the state in Fig. 3 and the state therebetween). The elastic member 19 is inhibited from applying the force to each of the members 14 and 15 in a state where the member 14 is disposed between the position P13 and the position P12, i.e., in a state where the member 15 is disposed between the position P23 and the position P22.

The rotation transmission portion 10 of the clutch device 100 is in the transmission state while the member 16 is not being operated. In the transmission state, the wall portion 13a is disposed and sandwiched between the wall portion 2a and the wall portion 14a by the force generated by the elastic member 17. In the clutch device 100, the half clutch state and the interruption state of the rotation transmission portion 10 are obtained by movements of the members 14 and 15 to one side in the axial direction, i.e., to the left side in Figs. 1 to 3, by a force (operation force) applied to the member 16 against the force generated by the elastic member 17. Each of the elastic members 18 and 19 generates the force which diminishes the force generated by the elastic member 17. That is, each of the elastic members 18 and 19 contributes to reduce the operation force for operating the member 16 so as to shift the rotation transmission portion 10 of the clutch device 100 from the transmission state to the half clutch state or the interruption state. That is, each of the elastic members 18 and 19 is an example of an assist spring. In the clutch device 100, each of the elastic members 17, 18 and 19 is specified so that torque is transmitted without slippage at the rotation transmission portion 10 in a state where the member 14 is disposed at the position P11 and the member 15 is disposed at the position P21. Further, each of the elastic members 17, 18 and 19 is specified so that the force generated by the elastic member 17 is diminished by the force generated by each of the elastic members 18 and 19 and so that the force operating the member 16 that moves the members 14 and 15 becomes relatively small. It is understood from Fig. 5 that each of the two elastic members 18 and 19 generates a load in an opposite direction from a load generated by the elastic member 17. A resultant force of the two elastic members 18 and 19 which may be relatively easily constructed obtains characteristics for diminishing the force of the elastic member 17 within a wider movable range of each of the members 15 and 16.

Nevertheless, desired characteristics may not be obtained because of settling of the elastic members 17, 18, 19, aging degradation such as abrasion, for example, of the friction member 13d or individual variability of components. Therefore, the clutch device 100 includes the variably settable portion 20. The variably settable portion 20 includes the members 21 and 22 facing in the axial direction and making contact with each other. The member 21 is connected to the elastic member 18 and the member 22 is connected to the wall portion 15a of the member 15. The members 21 and 22 are positioned between the member 14 and the member 15. The member 21 is disposed between the member 22 and the member 14 and the member 22 is disposed between the member 21 and the member 15. The elastic member 18 is disposed between the member 21 and the member 14. The variably settable portion 20 may change a distance obtained by the members 21 and 22 in the axial direction, i.e., a length of the variably settable portion 20 in the axial direction. The change in distance obtained by the members 21 and 22 in the axial direction causes a change in distance between the wall portion 14a of the member 14 and the wall portion 15a of the member 15. Accordingly, a distance of a space in the axial direction where the elastic members 17, 18, 19 and the friction members 13d, for example, exist in a state where the members 14, 15 and 16 are disposed at respective positions in the axial direction may be changed. Further, the elastic forces of the elastic members 17, 18 and 19 and contact states of the friction members 13d with the wall portions 2a and 14a, for example, in a state where the members 14, 15 and 16 are disposed at respective positions in the axial direction may be changed. For example, as for the elastic member 19, a distance D in the axial direction (see Fig. 2) between the wall portions 13a and 13f which support opposed axial end portions of the elastic member 19 in a state where the member 15 is disposed at a predetermined position is changed by the adjustment of the variably settable portion 20. The distance D in the axial direction between the wall portions 13a and 13f supporting the opposed axial end portions of the elastic member 19 in a state where the member 15 is disposed at the predetermined position (the same position before and after the adjustment of the variably settable portion 20) decreases with increase of the length of the variably settable portion 20.

As illustrated in Figs. 1 to 4, the members 21 and 22 overlap each other in the axial direction. Each of the members 21 and 22 is annularly formed with reference to the rotation center Ax. The member 21 includes wall portions 21b and 21c, and the protruding portions 21d. The wall portion 21b is formed in a disc form to expand while being orthogonal to the rotation center Ax. The wall portion 21c protrudes to one side in the axial direction from a radially inner end portion of the wall portion 21b, i.e., to the left side in Fig. 1. The wall portion 21c is formed in a cylindrical form. Each of the protruding portions 21d protrudes to one side in the axial direction from a radially outer end portion of the wall portion 21b, i.e., to the left side in Fig. 1. The protruding portions 21d are provided at the wall portions 2d, respectively. The member 22 is formed in a cylindrical form.

The members 21 and 22 overlap the wall portion 14a, the friction members 13d, the wall portion 13a and the elastic members 18, 19, for example. The members 21 and 22 are arranged relatively close to a contact point of the elastic member 17 with the wall portion 15a. In the present embodiment, the member 21 is connected to the elastic member 18. The member 21 integrally moves with the elastic member 18 and the member 14 in the axial direction. The member 21 is rotatable about the rotation center Ax relative to the elastic member 18 and the member 14, for example. The member 22 is connected to the wall portion 15a of the member 15. The member 22 integrally moves with the member 14 in the axial direction. The member 22 is restricted from rotating about the rotation center Ax relative to the member 22, for example. The member 22 may be fixed to the wall portion 15a.

As illustrated in Fig. 6, one of the members 21 and 22 (in the present embodiment, both) includes surfaces 21a or 22a (inclined surfaces or spiral surfaces) which approach one side (for example, upper side) in the axial direction (up-down direction in Fig. 6) while extending to the other side (for example, left side) in the circumferential direction (left-right direction in Fig. 6). The surfaces 21 a are provided at the wall portion 21c. The plural surfaces 21 a and 22a are provided at constant intervals at the members 21 and 22. A step at which an axial position is changed is provided between the two surfaces 21a and 22a abutting each other. The other of the members 21 and 22 includes the surfaces 22a or 21a facing the surfaces 21a or 22a of one of the members 21 and 22 to make contact therewith. The plural surfaces 21a including the same configurations as one another provided at constant intervals in the circumferential direction and the plural surfaces 22a including the same configurations as one another provided at constant intervals in the circumferential direction make contact with one another. In a case where one of the members 21 and 22 rotates about the rotation center Ax relative to the other of the members 21 and 22, the surfaces 21 a and the surfaces 22a slide one another, thereby changing the distance obtained by the members 21 and 22 in the axial direction. In the variably settable portion 20, a relative position between the member 21 and the member 22 in the circumferential direction is variably specified so that the distance obtained by the members 21 and 22 in the axial direction is variably specified. As a result, the length (height, thickness) of the variably settable portion 20 in the axial direction is variably specified. The members 21 and 22 are configured to separate from each other in the axial direction. The members 21 and 22 are tightly in contact with each other in the axial direction by the forces generated by the elastic members 17, 18 and 19. The member 22 is an example of a fourth member and the member 21 is an example of a fifth member.

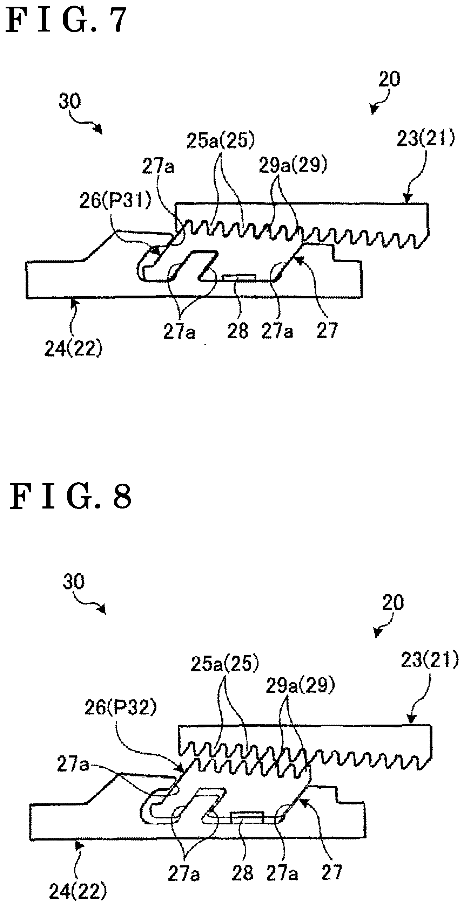

As illustrated in Fig. 7, the variably settable portion 20 includes a moving portion 30. The moving portion 30 moves the fifth member relative to the member 22 to one side in the circumferential direction in a case where the movement of the member 21 to one side in the axial direction is restricted by the wall portion 2d, so that the members 22 and 21 are separated from each other in the axial direction. Specifically, the moving portion 30 includes an adjustment portion 23 provided at the member 21 and an adjustment portion 24 provided at the member 22. A left-right direction in Figs. 7 to 9 corresponds to the circumferential direction and an up-down direction in Figs. 7 to 9 corresponds to the axial direction. The adjustment portion 23 is coupled (connected, supported or fixed) to the member 21 so as to be at least integrally movable in the circumferential direction. The adjustment portion 24 is coupled to the member 22 so as to be at least integrally movable in the circumferential direction. The adjustment portion 23 includes a saw-tooth train 25 including plural saw-teeth 25a arranged side by side along the circumferential direction. The saw-tooth train 25 extends along the circumferential direction and extends substantially in parallel to the surface 21 a. The adjustment portion 24 includes a meshing portion 26, a support portion 27 and an elastic portion 28. The meshing portion 26 is meshed with the saw-teeth 25a of the saw-tooth train 25. The meshing portion 26 is supported to be movable in a direction intersecting with the axial direction and intersecting with the circumferential direction (an oblique direction and a spiral direction along a cylindrical surface formed between the axial direction and the circumferential direction, which is hereinafter simply referred to as an inclined direction). Specifically, a guide portion 27a is provided at the support portion 27 along the inclined direction. At least a portion of the meshing portion 26 is movably supported by the guide portion 27a. The elastic portion 28 generates a force by which the meshing portion 26 is elastically pressed in a direction where the meshing portion 26 comes closer to the saw-teeth 25a. The elastic portion 28 is a plate spring, for example. The meshing portion 26 includes a saw-tooth train 29 including plural saw-teeth 29a which are arranged along the circumferential direction. The saw-tooth train 29 extends along the circumferential direction and extends substantially in parallel to the surface 22a. The saw-teeth 25a and the saw-teeth 29a are meshed with one another.

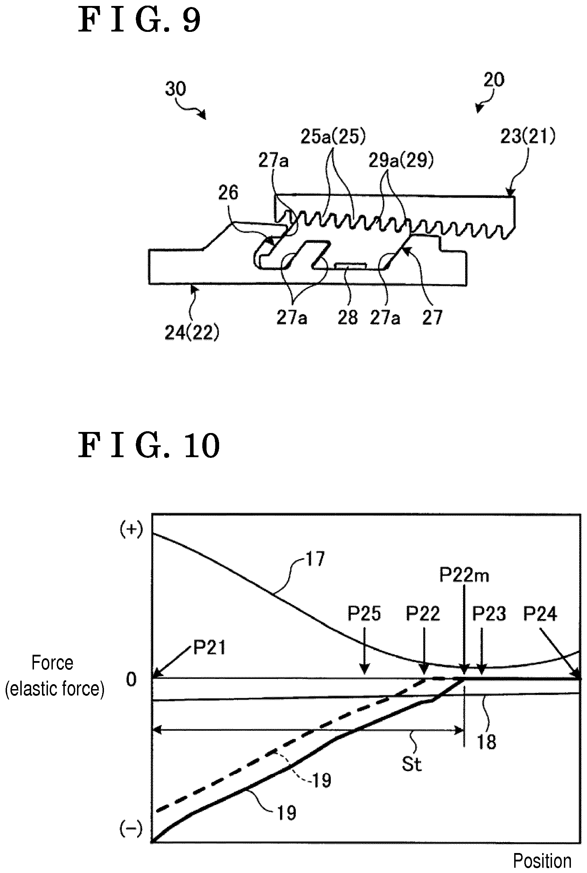

In the variably settable portion 20, positions of the members 21 and 22 in the circumferential direction are decided by the meshing between the saw-teeth 25a and the saw-teeth 29a. Accordingly, the distance obtained by the members 21 and 22 in the axial direction and further the distance between the wall portion 14a of the member 14 and the wall portion 15a of the member 15 in the axial direction are decided. In a process where the members 16 and 15 move from the state illustrated in Fig. 1 to the state illustrated in Fig. 4 by an actuator (not illustrated), for example, the member 21 moves to one side in the axial direction by the elastic force of the elastic member 18. In addition, the member 14 moves to one side in the axial direction by an elastic force of an elastic member such as a strap, for example, not illustrated. That is, the members 14, 21 and the elastic member 18 integrally move to one side in the axial direction. In the process of the aforementioned movement, the protruding portion 21c of the member 21 makes contact with the wall portion 2d so as to stop the movement of the member 21 to one side in the axial direction. When the members 21 and 22 are separated from each other in the axial direction as illustrated in Fig. 8, the saw-teeth 29a of the meshing portion 26 move in the axial direction to separate from the saw-teeth 25a. That is, the meshing portion 26 moves from a position P31 at which the meshing portion 26 is meshed with the saw-teeth 25a to a position P32 at which the meshing portion 26 is separated from the saw-teeth 25a. At this time, the meshing portion 26 is guided by the guide portion 27a in the oblique direction and is pushed towards the adjustment portion 24 by the force generated by the elastic portion 28. Thus, the position P32 is disposed at the other side in the circumferential direction relative to the position P31. In a case where the members 15 and 16 move by the actuator from the state in Fig. 8 so that the members 21 and 22 come closer to each other in the axial direction as illustrated in Fig. 9, the saw-teeth 25a which are meshed with one portion of the saw-teeth 29a as illustrated in Fig. 7 are then meshed with the other portion of the saw-teeth 29a (i.e., the other position in the saw-tooth train 29) displaced in the circumferential direction. Consequently, the adjustment portions 23 and 24 are separated from each other in the left-right direction in Figs. 7 to 9 by the guiding between the guide portion 27a and the meshing portion 26. The members 21 and 22 slide relative to each other in the left-right direction in Fig. 6, i.e., in the circumferential direction. Specifically, because the member 15 is connected to the member 22 in a state where the member 15 is restricted from moving in the circumferential direction relative to the member 22, the member 21 slides in the circumferential direction relative to the member 22. The surfaces 21a and 22a slide one another so that the members 21 and 22 separate from each other in the axial direction. Accordingly, in the variably settable portion 20, the members 21 and 22 once separate from each other and then come closer to each other in the axial direction so that the distance between the wall portion 14a (member 14) and the wall portion 15a (member 15) in the axial direction increases. The force in the axial direction obtainable by the elastic member 19 (i.e., a repulsive force caused by elastic deformation or an elastic force) increases with increase of length in distance between the wall portion 14a and the wall portion 15a in the axial direction. The variably settable portion 20 may cause the force in the axial direction obtainable by the elastic member 19 to come closer to a desired value in a case where the aforementioned force is smaller than the desired value, for example. Specifically, the above is effective in a case where a desired force is not obtained due to accumulation of dimension errors of respective portions in an initial state where the elastic member 19 is assembled, or in a case where the desired force is not obtained due to aging degradation of the elastic member 19, for example. In a case where the friction member 13d is worn, a distance between opposed end portions of the elastic member 17 in the axial direction increases so that the force generated by the elastic member 17 decreases. In such case, the force obtained by the elastic member 17 in the axial direction may increase. Characteristics of other components than those explained here or other phenomenon than those explained here may come closer to desired characteristics by the variably settable portion 20.

By the adjustment of the variably settable portion 20, the characteristics of the elastic member 19 are changeable from those indicated by a broken line (before the adjustment) to those indicated by a solid line (after the adjustment) in Fig. 10. The notation of Fig. 10 is the same as Fig. 5. After the adjustment, a pressing amount (length) of the elastic member 19 by the wall portion 14a at each displacement of the wall portion 15a is greater than before the adjustment. Thus, the force generated by the elastic member 19 at each displacement of the wall portion 15a after the adjustment is greater than before the adjustment. In addition, the force generated by the elastic member 19 decreases while the wall portion 15a is separating from the wall portion 14a with the movement of the member 16 from the state in Fig. 3. The force generated by the elastic member 19 becomes zero when the elastic member 19 is brought to a substantially free state where the elastic member 19 is inhibited from being sandwiched between the wall portions 14a and 13a (i.e., the state in Fig. 2 corresponding to a state with P22m in Fig. 10). It is understood from Fig. 10 that a displacement amount St of the member 15 from the transmission state of the rotation transmission portion 10 to the substantially free state of the elastic member 19, i.e., a movable range (stroke) of the member 15 where the elastic member 19 effectively functions, increases with increase of distance obtained by the members 21 and 22 in the axial direction by the adjustment of the variably settable portion 20. The change of characteristics from those indicated by the broken line to those indicated by the solid line in Fig. 10 may be performed on a basis of a comparison between parameter conforming to power generated by the actuator and a predetermined value (threshold value).

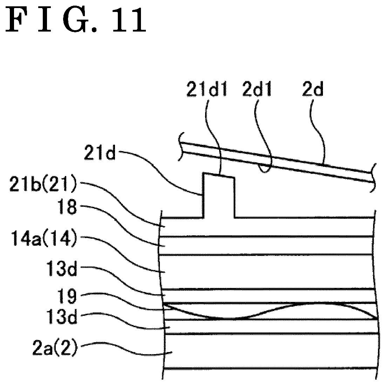

Next, the member 21 of the variably settable portion 20 and the wall portion 2d of the cover 2 are explained in detail with reference to Figs. 11 to 13. The member 21 and a surrounding thereof are illustrated in Figs. 11 to 13. A left-right direction and an up-down direction in Figs. 11 to 13 correspond to the circumferential direction and the axial direction, respectively. As illustrated in Fig. 11, the wall portion 2d includes a contact portion 2d1. The contact portion 2d1 is a surface at the other side of the wall portion 2d in the axial direction. The protruding portion 21d includes a contact portion 21d1. The contact portion 21d1 is a surface at one side of the protruding portion 21 d in the axial direction. The contact portion 2d1 and the contact portion 21d1 make contact with each other in the axial direction. The length of the contact portion 2d1 in the circumferential direction is longer than the length of the contact portion 21d1 in the circumferential direction. Each of the contact portions 2d1 and 21d1 is an inclined surface inclining to the other side in the axial direction, i.e., to the lower side in Fig. 11, while extending to one side in the circumferential direction, i.e., to the right side in Fig. 11. The contact portions 2d1 and 21d1 are substantially parallel to each other.

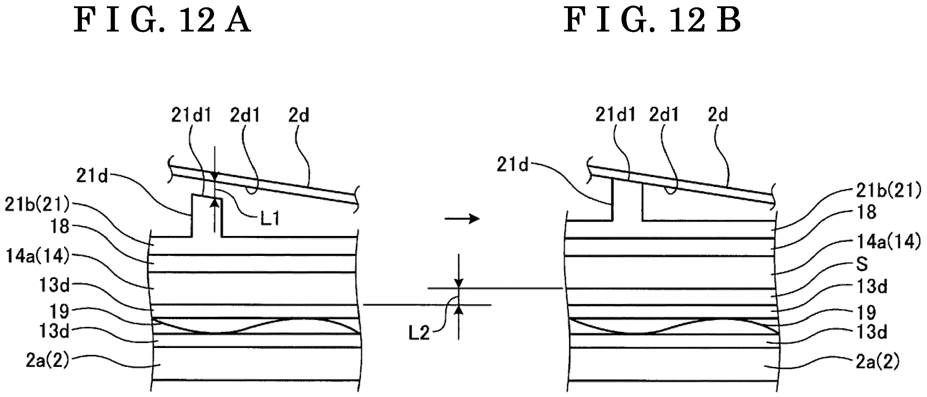

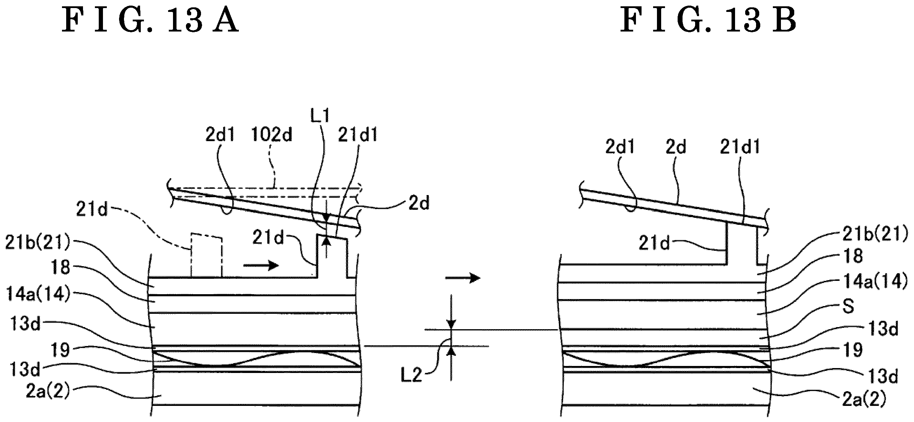

Figs. 12 and 13 illustrate the adjustment conducted by the variably settable portion 20. As illustrated in Fig. 12A, the protruding portion 21 d is separated from the wall portion 2d in the axial direction, i.e., in the up-down direction in Fig. 12, before the adjustment. Then, as illustrated in Fig. 12B, the members 14, 21 and the elastic member 18 integrally move to one side in the axial direction in the process of adjustment so that the protruding portion 21 d makes contact with the wall portion 2d. At this time, the member 14 moves in the axial direction to separate from the friction member 13d. Accordingly, a clearance S is generated between the member 14 and the friction member 13d. Because of the aforementioned adjustment, the member 21 moves to one side in the circumferential direction, i.e., to move to the right side in Fig. 12, and thereafter moves to the other side in the axial direction, i.e., to move to the lower side in Fig. 12. As a result, the protruding portion 21d separates from the wall portion 2d.

Fig. 13 illustrates a state where the adjustment by the variably settable portion 20 is again conducted after the adjustment in Fig. 12. The adjustment in Fig. 12 is hereinafter referred to as a previous adjustment and the adjustment in Fig. 13 is hereinafter referred to as a present adjustment for convenience of explanation. The friction member 13d in Fig. 13 is worn as compared to the friction member in Fig. 12. The thickness of the friction member 13d in the axial direction in Fig. 13, i.e., the thickness in the up-down direction in Fig. 13, is thinner than the thickness in the axial direction of the friction member in Fig. 12. At the time of the present adjustment, the position of the protruding portion 21d in the circumferential direction is changed from the position of the protruding portion 21d indicated by an alternate long and short dash line in Fig. 13A to the position of the protruding portion 21 d indicated by a solid line in Fig. 13A. At this time, the contact portion 2d1 is the inclined surface inclining to the other side in the axial direction, i.e., to the lower side in Fig. 12, while extending to one side in the circumferential direction, i.e., to the right side in Fig. 12. Thus, as understood from Figs. 12A and 13A, a present distance L1 between the protruding portion 21d and the wall portion 2d in the axial direction as illustrated in Fig. 13A and a previous distance L1 between the protruding portion 21d and the wall portion 2d in the axial direction as illustrated in Fig. 12A are substantially equalized to each other. A moving amount L of the member 14 in the axial direction from the state in Fig. 13A to a state where the protruding portion 21d makes contact with the wall portion 2d as illustrated in Fig. 13B may be substantially equalized to a previous moving amount L in Fig. 12. As a result, a driving amount of the actuator which moves the members 15 and 22, for example, to one side in the axial direction may be easily substantially equalized at each adjustment.

As illustrated in Fig. 13A, in a case where a wall portion 102d functioning as a stopper of the protruding portion 21d is not inclined in the axial direction, the adjustment by the variably settable portion 20 causes a distance between the protruding portion 21 d and the wall portion 102d in the axial direction to increase. On the other hand, according to the present embodiment, because the contact portion 2d1 is the inclined surface inclining to the other side in the axial direction while extending to one side in the circumferential direction, the distance L1 between the protruding portion 21d and the wall portion 21d is restrained from fluctuating by the adjustment.

Accordingly, the clutch device 100 of the embodiment includes the variably settable portion 20 which is capable of changing the axial length thereof. Thus, for example, the elastic deformation amount of the elastic member (for example, the elastic members 17 and 19) depending on the position of each of the members 14, 15 and 16 is adjustable by the adjustment of the axial length of the variably settable portion 20. The desired characteristics are obtainable accordingly. In a case where a difference from the desired characteristics is large because of accumulation of manufacturing errors or aging degradation of the elastic members 17, 18, 19 and the friction member 13d, for example, the axial length of the variably settable portion 20 is changed to obtain characteristics close to the desired characteristics.

In addition, according to the present embodiment, the protruding portion 21d is provided at the member 21 of the variably settable portion 20 and is supported by the stopper portion in the axial direction. Thus, the construction of the member 14 is restrained from being complicated.

In addition, according to the present embodiment, each of the contact portion 2d1 at the wall portion 2d making contact with the protruding portion 21 d and the contact portion 21d1 at the protruding portion 21d making contact with the wall portion 2d is the inclined surface inclining to the other side in the axial direction while extending to one side in the circumferential direction. Thus, even in a case where the length of the variably settable portion 20 in the axial direction is changed, for example, the distance L1 between the protruding portion 21d and the wall portion 2d in the axial direction is restrained from changing. Thus, the size of the actuator which operates the variably settable portion 20 is restrained from increasing.

In the present embodiment, the elastic member 18 is disposed between the member 14 and the member 21 to generate the force against the force of the elastic member 17 applied to the member 21, the force changing depending on the position of the member 14 in the axial direction. Thus, the force of the operation portion for moving the member 14 may be easily reduced, for example. In addition, the elastic member 18 is disposed between the members 14 and 21 so that the variably settable portion 20 is accurately controllable by the actuator with a reduced size.

In the present embodiment, the example where both of the contact portions 2d1 and 21d1 serve as the inclined surfaces each of which inclines to the other side in the axial direction while extending to one side in the circumferential direction is explained. Instead, for example, only the contact portion 2d1 may be the inclined surface. In addition, for example, only the contact portion 21d1 may be the inclined surface by increasing the length of the contact portion 21d1 in the circumferential direction relative to the length of the contact portion 2d1 in the circumferential direction.

### <First modified example>

In the present modified example, a variably settable portion 20A is different from the variably settable portion 20 according to the aforementioned first embodiment. The variably settable portion 20A may be provided in place of the variably settable portion 20.

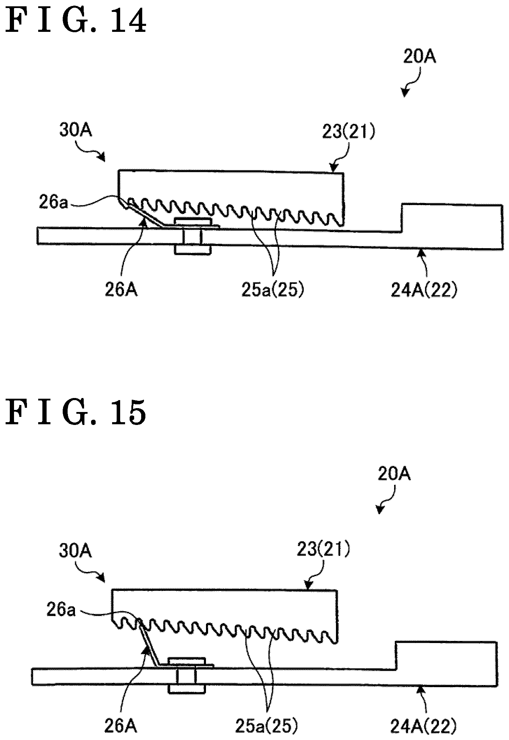

The variably settable portion 20A illustrated in Figs. 14 and 15 includes the members 21, 22, the adjustment portion 23 and the saw-tooth train 25, for example, in the same way as the variably settable portion 20. The variably settable portion 20A includes an adjustment portion 24A and a meshing portion 26A which are different from the first embodiment. A moving portion 30A includes the adjustment portion 23, the saw-tooth train 25, the adjustment portion 24A and the meshing portion 26A. The adjustment portion 24A includes the meshing portion 26A in a plate spring form. The meshing portion 26A is elastically bent at an end portion of the adjustment portion 24A facing the adjustment portion 23 (saw-tooth train 25). The meshing portion 26A protrudes towards the adjustment portion 23 by an elastic force of the meshing portion 26A in a state where an external force is not applied thereto. The meshing portion 26A is elastically bent towards the adjustment portion 24A in a state where the members 21 and 22 come closer to each other. A tip end portion 26a of the meshing portion 26A is meshed with the saw-teeth 25a by an elastic repulsive force (elastic force) of the meshing portion 26A. In a case where the members 21 and 22 separate from each other in the axial direction by the operation of the actuator 303, for example, the meshing portion 26A disengages from the saw-teeth 25a in the axial direction. In a state where the meshing portion 26A is away from the saw-teeth 25a, the meshing portion 26A is bent in a further protruding direction by the elastic force. The tip end portion 26a of the meshing portion 26A which is meshed with one portion of the saw-teeth 25a before separating from the saw-teeth 25a is then positioned at the axial direction side of the other portion of the saw-teeth 25a displaced in the circumferential direction. That is, in the present modified example, the meshing portion 26A is also supported at the adjustment portion 24A (the member 22 and the fifth member) so as to move to the other side in the circumferential direction in a case separating from the saw-teeth 25a. Thus, the meshing portion 26A which is meshed with one portion of the saw-teeth 25a before separating from the saw-teeth 25a is then meshed with the other portion of the saw-teeth 25a displaced in the circumferential direction in a case where the members 21 and 22 again come closer to each other in the axial direction. Accordingly, the members 21 and 22 slide each other in the circumferential direction to change the distance obtained by the members 21 and 22 in the axial direction. According to the present modified example, the newly constructed variably settable portion 20A is obtainable. In addition, according to the present modified example, the variably settable portion 20A may be easily constructed.

### <Second modified example>

In the present modified example, a variably settable portion 20B is different from the variably settable portion 20 according to the aforementioned first embodiment. The variably settable portion 20B may be provided in place of the variably settable portion 20.

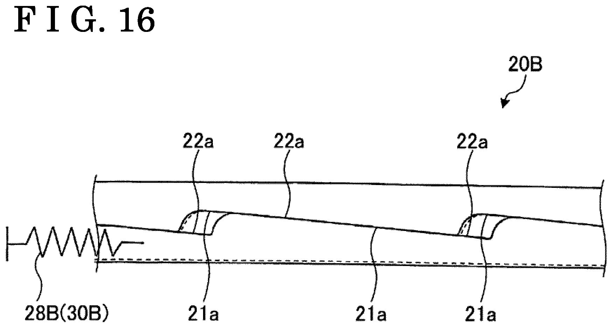

The variably settable portion 20B illustrated in Fig. 16 includes the members 21 and 22 same as in the variably settable portion 20. At this time, a moving portion 30B of the variably settable portion 20B does not include the adjustment portions 23 and 24. The moving portion 30B includes an elastic portion 28B which applies a force (compression reaction force) in the circumferential direction to at least one of the members 21 and 22. The elastic member 28B is a coil spring, for example. In a case where the surfaces 21a of the member 21 and the surfaces 22a of the member 22 slide one another by an elastic force of the elastic member 28B, the distance obtained by the members 21 and 22 in the axial direction is changed. In the normal state where the members 21 and 22 are in contact with each other, the sliding between the members 21 and 22 is restrained by friction between the surfaces 21a and 22a. Thus, in the present embodiment, the member 15 is moved towards the position P24 by the actuator 303 so as to apply a force for separating the members 21 and 22 in the axial direction. The friction force between the members 21 and 22 decreases, i.e., the force applied between the members 21 and 22 in the axial direction is weaken, so that the members 21 and 22 slide each other in the circumferential direction to change the distance in the axial direction. According to the present modified example, for example, the variably settable portion 20B may be simply constructed. The length of the variably settable portion 20B in the axial direction (adjustment amount) is adjustable by the moving amount (stroke) of the actuator 303. Thus, according to the present modified example, the length of the variably settable portion 20B in the axial direction may be further easily or accurately changed.

### <Second embodiment>

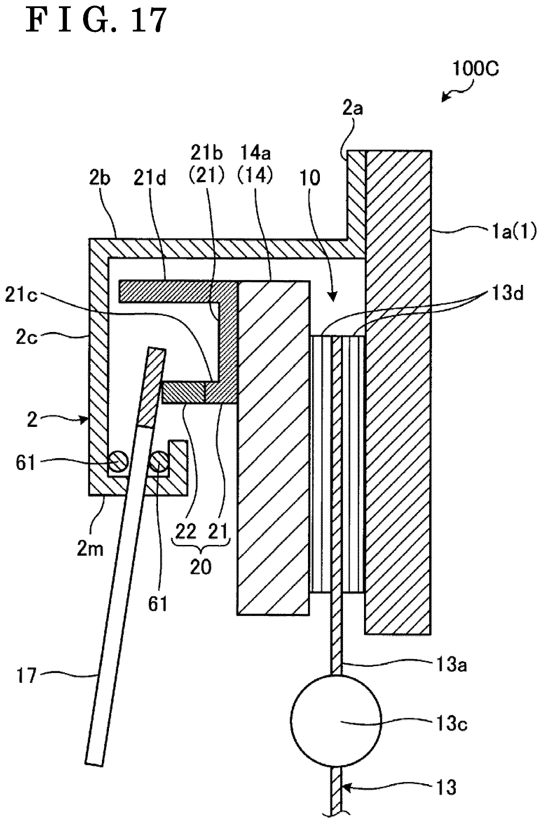

A clutch device 100C according to the present embodiment as illustrated in Fig. 17 includes the members 1, 13, 14, the cover 2, the elastic member 17 and the variably settable portion 20, for example, in the same manner as the clutch device 100 according to the first embodiment. In the present embodiment, the elastic members 18 and 19 are not provided.

The friction members 13d are disposed between the wall portion 13a and the wall portion 1a and between the wall portion 13a and the wall portion 14a, respectively.

The cover 2 includes the wall portions 2a, 2b, 2c and a support portion 2m. The wall portion 2a is positioned at one axial side of the wall portion 1a of the member 1, i.e., at the left side in Fig. 14 of the wall portion 1a of the member 1, so as to overlap the wall portion 1a. The wall portion 2a is connected to the wall portion 1a. The wall portion 2a is formed in an annular form and a plate form to expand while substantially intersecting with the rotation center Ax. The wall portion 2b protrudes to one side in the axial direction from a radially inner end portion of the wall portion 2a to be formed in a cylindrical form with reference to the rotation center Ax. The wall portion 2c protrudes radially inward from an end portion of the wall portion 2b at one side in the axial direction. The wall portion 2c is formed in a disc form to expand while intersecting with the rotation center Ax. The support portion 2m protrudes from a radially inner end portion of the wall portion 2c to the other side in the axial direction, i.e., to the right side in Fig. 14. The cover 2 integrally rotates with the member 1. A support member 61 is attached to the support portion 2m.

The elastic member 17 is constituted as a diaphragm spring, for example. The elastic member 17 includes plural plate members arranged radially. The elastic member 17 is supported by the support member 61. The elastic member 17 swings with reference to the support member 61. The elastic member 17 is disposed between the bearing 31 (not illustrated in Fig. 17) and the member 14. The variably settable portion 20 is disposed between the elastic member 17 and the member 14. The variably settable portion 20A or 20B may be provided in place of the variably settable portion 20. A radially inner end portion of the elastic member 17 is connected to the bearing 31 (see Fig. 1) and a radially inner end portion of the elastic member 17 is connected to the member 22 of the variably settable portion 20. The elastic member 17 generates an elastic force in a direction where the variably settable portion 20 and the member 14, and the bearing 31 are separated from each other.

The member 22 of the variably settable portion 20 is connected to the elastic member 17 and the member 21 is separated from the elastic member 17. The member 22 may be fixed to the elastic member 17. The member 21 overlaps the wall portion 14a of the member 14 at one axial side, i.e., at the left side in Fig. 14 and makes contact with the wall portion 14a. The member 21 is rotatable about the rotation center Ax relative to the member 14.

In the present embodiment, the member 21 makes contact with the wall portion 2c in the axial direction so as to be inhibited from moving to one side in the axial direction beyond the position at which the member 21 makes contact with the wall portion 2c, i.e., to the left side in Fig. 14. That is, the wall portion 2c supports the member 21 in the axial direction to thereby limit the movement of the member 21 to one side in the axial direction. Specifically, the wall portion 2c supports the protruding portion 21 d of the member 21 in the axial direction. The wall portion 2c is an example of the stopper portion. In the present embodiment, the wall portion 2d is not provided.

According to the aforementioned construction, the similar effect to that of the first embodiment is obtainable.

In addition, in the present embodiment, the member 22 is connected to the elastic member 17 while the member 21 is separated from the elastic member 17. The member 21 is rotatable about the rotation center Ax relative to the member 14. Thus, the elastic member 17 is restrained from being worn by the member 22, for example.

The embodiments and the modified examples of the present invention are explained in the above. The aforementioned embodiments and the modified examples are examples and do not intend to limit a scope of the invention. Various omissions, replacements, combinations and changes may be conducted on the aforementioned embodiments and the modified examples which may be performed in various modes, within a scope not departing from a principle of the invention. In addition, specifications such as a construction and a configuration (structure, type, direction, configuration, size, length, width, thickness, height, number, arrangement, position and material, for example) may be appropriately changed. For example, arrangement and construction of each portion of the clutch device is not limited to the aforementioned embodiments and modified examples. The clutch device may be provided at various positions of various devices.

### EXPLANATION OF REFERENCE NUMERALS

2: cover, 2c, 2d: wall portion (stopper portion), 13: member (first member), 14: member (second member), 15: member (third member), 17: elastic member (first elastic member), 18: elastic member (second elastic member), 20, 20A, 20B: variably settable portion, 21: member (fifth member), 22: member (fourth member), 30, 30A, 30B: moving portion, 100, 100C: clutch device, Ax: rotation center, P11: position (first position), P12: position (second position)

## Claims

1. A clutch device comprising:
a first member provided to be rotatable around a rotation center;
a second member provided to be rotatable around the rotation center and provided to be movable in an axial direction of the rotation center at least between a first position at which torque is transmitted by friction between the second member and the first member and a second position being away from the first member as compared to the first position, the second position at which torque is inhibited from being transmitted;
a first elastic member generating a force by which one of the first member and the second member is pressed against the other of the first member and the second member, the force changing depending on a position of the second member in the axial direction;
a third member provided to be movable in the axial direction and changing the position of the second member in the axial direction;
a variably settable portion positioned between the second member and the third member and configured to change a length of the variably settable portion in the axial direction;
a cover provided to be rotatable about the rotation center to cover the variably settable portion;
the variably settable portion including a fourth member which is positioned at one side in the axial direction relative to the one of the first member and the second member and which is disposed between the one of the first member and the second member and the first elastic member, the variably settable portion including a fifth member which is positioned at the other side in the axial direction relative to the fourth member and which is disposed between the fourth member and the one of the first member and the second member, the fifth member being configured to separate from the fourth member in the axial direction, the fifth member being configured to move to the other side in the axial direction relative to the fourth member by moving to one side in a circumferential direction of the rotation center relative to the fourth member; and
a moving portion,
the cover including a stopper portion which restricts a movement of the fifth member to the one side in the axial direction by supporting the fifth member in the axial direction,
the moving portion moving the fifth member to the one side in the circumferential direction relative to the fourth member in a case where the fifth member is restricted from moving to the one side in the axial direction by the stopper portion and the fourth member and the fifth member are separated from each other in the axial direction.

2. The clutch device according to claim 1, wherein at least one of a contact portion at
the stopper portion making contact with the fifth member and a contact portion at the fifth member making contact with the stopper is an inclined surface inclining to the other side in the axial direction while extending to the one side in the circumferential direction.

3. The clutch device according to either claim 1 or 2, wherein the fourth member is connected to the first elastic member,
the fifth member is away from the first elastic member and is rotatable about the rotation center relative to the second member.

4. The clutch device according to any one of claims 1 to 3, further comprising a second elastic member disposed between the second member and the fifth member and generating a force against the force of the first elastic member applied to the fifth member, the force of the second elastic member changing depending on the position of the second member in the axial direction.
